Europäisches Patentamt

**(19)** European Patent Office

Office européen des brevets

**(11)** Publication number : **0 393 085 B1**

**(12)** # EUROPEAN PATENT SPECIFICATION

**(45)** Date of publication of patent specification :
**22.04.92 Bulletin 92/17**

**(51)** Int. Cl.$^5$ : **G01C 19/64**

**(21)** Application number : **88909885.1**

**(22)** Date of filing : **19.08.88**

**(86)** International application number :
**PCT/US88/02867**

**(87)** International publication number :
**WO 89/01605 23.02.89 Gazette 89/05**

**(54) RING LASER GYRO FRAME DESIGN RESISTANT TO THERMAL GRADIENT EFFECTS.**

**(30)** Priority : **21.08.87 US 88079**

**(43)** Date of publication of application :
**24.10.90 Bulletin 90/43**

**(45)** Publication of the grant of the patent :
**22.04.92 Bulletin 92/17**

**(84)** Designated Contracting States :
**DE FR GB IT**

**(56)** References cited :
**DE-A- 3 006 977**
**DE-A- 3 403 308**
**DE-A- 3 708 661**
**US-A- 4 521 110**

**(73)** Proprietor : **Litton Systems, Inc.**
**360 North Crescent Drive**
**Beverly Hills California 90210-9990 (US)**

**(72)** Inventor : **FRIDRIC, Bernard, G.**
**6220 Owensmouth Avenue, Apt. 276**
**Woodland Hills, CA 91367 (US)**

**(74)** Representative : **Godsill, John Kenneth et al**
**Hazlitt House 28 Southampton Buildings,**
**Chancery Lane**
**London, WC2A 1AT (GB)**

## Description

### Background of the Invention

### Field of Invention

This invention relates to ring laser gyros and, more particularly, to an improved gyro having a reduced sensitivity to bias caused by thermal gradients.

### Description of The Prior Art

Ring laser gyros use two or more counter-propagating light beams of predetermined zero-angular velocity frequencies to measure the rotational rate about a sensitive axis of a ring laser as a function of the difference in frequency, i.e., beat frequency, between the counter-propagating beams. Such counter-propagating beams are laser beams that are usually stimulated by an electric discharge in a gain medium, such as a suitable mixture of helium and neon.

The gas gain medium flows during operation of the ring laser gyro both because of a thermal gradient along gain region of the enclosing conduit and an electrophoretic force directed along the excited plasma discharge. The flow caused by electrophoresis is called Langmuir flow.

The interaction of the light beams with the moving laser gas produces a frequency shift of the counter-propagating beams. The beam propagating in the direction. of the gas flow experiences an optical length which is different from that of the beam propagating in the direction opposite to the gas flow. The flow then produces a beat frequency between the counter-propagating beams. That beat frequency bias is present when the ring laser is not experiencing rotation.

Rotation of the ring laser about its sensing axis lengthens the path of one of the counter-propagating beams and shortens the path of the other beam. Such variations in the path-lengths of the beams cause the beam frequencies to vary, one increasing and the other decreasing. The beat beween those two beams is, except for the beat produced by the gas flow, a measure of the experienced angular velocity. Output information, produced by rotation of the ring laser path may thus contain an error due to the bias caused by the gas plasma flow.

It has been discovered that the accuracy of the ring laser gyro is limited, in addition to being limited by Langmuir flow, by thermal gradients within the laser. Thermal gradients may be caused by many factors including the non-ambient temperature to which the laser is exposed and the internal heating within the laser due to resistance of the gas to current flow and by anode heating.

Two typical ring laser gyroscopes which do not address the problems of thermal gradients within the laser are described in DE-A1-3403308 and US-A-4521110

DE-A1-3403308 discloses a ring laser tyro which has primary dither means which dither two adjacent mirrors for eliminating lock-in and a secondary dither means including a current dither for modulating the current in each leg of the gyro to eliminate non-linearities in the gyro output.

US-A-4521110 discloses a laser gyro having two physically separated cavities. Each cavity supports a wave travelling in only one direcrtion. Other waves, which are normally set up are prevented by a reversed feedback mirror. Lock-in is thus prevented.

DE-A1-3006977 does address the problem of temperature gradients within a ring laser cavity and attempts to overcome it by use of a special anode. The anode is designed so as to improve current stability in the glow discharge path as well as to have a lower current operation.

According to one aspect of the invention, there is provided a ring laser gyro having a ring laser conduit with a laser gas therein, including at least two means for delivering electrical energy to gain regions of said conduit to form electric fields which are oppositely poled relative to said conduit to generate counter-propagating laser beams within said ring laser conduit, said means for delivering electrical energy being symmetrically mounted to said ring laser conduit to define said gain regions and non-gain regions, said gain regions being symmetrically positioned to generate said at least two counter-propagating laser beams, characterized in that said laser passages include symmetrically mounted ratio-creating means therein for creating a ratio of gas flow conductance in said gain regions to gas flow conductance in said non-gain regions that is less than unity.

Thus certain embodiments of the invention can be designed so as to provide a means of controlling the ring laser gas plasma flow produced by thermal gradients. It provides an optimal ratio of flow conductance between the gain regions and the non-gain regions of the ring laser conduit. At this optimal ratio, the thermally induced gas flow vanishes within the gain regions, and therefore the thermal gradient does not affect the operation of the ring laser gyro.

One embodiment controls the plasma flow by placing a restriction symmetrically within the gain regions of the ring laser conduit. Another embodiment enlarges the cross-section of the non-gain regions of the ring laser conduit, thus causing the conductance of the non-gain regions to be greater than that of the gain regions. The enlarged non-gain regions enhance the gas flow in such non-gain regions where the flow does not noticeably affect the frequencies of the laser beams.

## BRIEF DESCRIPTION OF THE DRAWINGS

A better understanding of this invention may be had by reference to the specification and drawings, wherein:

Fig. 1 is a schematic diagram showing a ring laser gyro with the gain regions of the ring laser conduit marked by a grid pattern;

Fig. 2 shows a ring laser gyro in cross-section with a "T" shaped connection between the cathode and the laser conduits; and

Fig. 3 illustrates a ring laser gyro again in cross-section showing a "Y" shaped connection between the cathode and the laser conduit.

## DESCRIPTION OF THE PREFERRED EMBODIMENT

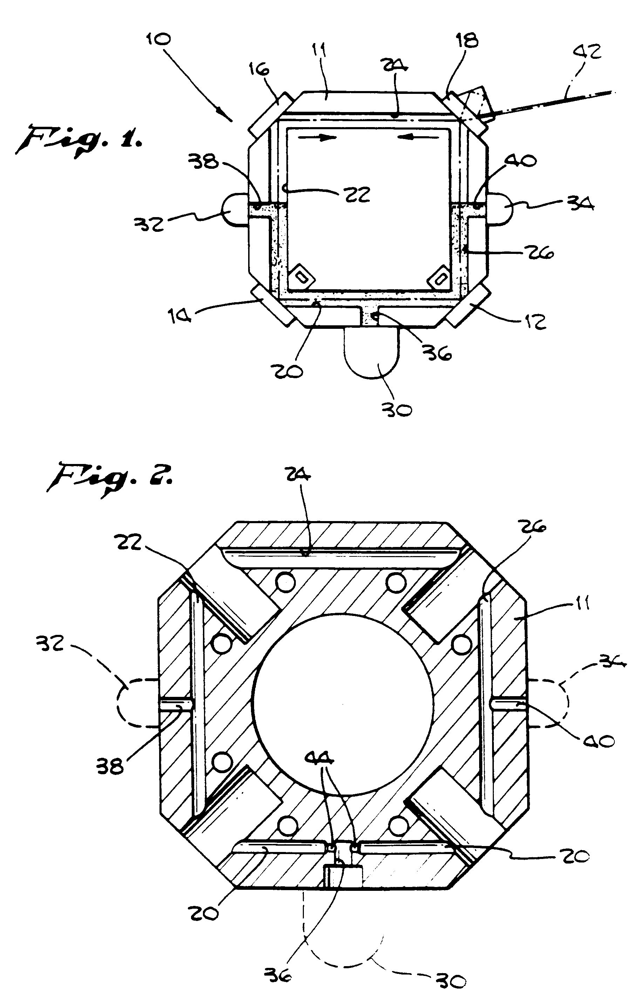

In Fig. 1, a ring laser gyro 10 is mounted in a laser block 11 which embodies the principles of the present invention. A ring laser path is produced by mounting corner mirrors 12, 14, 16 and 18 on each corner of the block 11. The ring laser conduit comprises passages 20, 22, 24 and 26 formed within the block 11 between mirrors 12, 14, 16 and 18. The ring laser conduit contains a laser gain medium, such as helium and neon, suitable for producing counter-propagating laser beams of predetermined frequency determined by the laser frequencies of the gases and the resonant frequency of the optical cavity. The conduit is dimensioned to support counter-propagating beams of electro-magnetic energy in the passages 20, 22, 24, 26. The ring laser is stimulated by an electrical discharge in the gain regions of the conduit.

An electrical discharge is produced between a cathode 30 open to the ring laser conduit and two anodes 32 and 34 which are open to the ring laser conduit and symmetrically positioned about the conduit relative to the cathode. Cathode 30 may be hermetically sealed to the center of one of the side faces of block 11 of the ring laser gyro 10 adjacent to passage 20. The cathode 30 is joined to the passage 20 through auxiliary passage 36.

Anodes 32 and 34 each comprise a conductive electrode coupled to the ring laser passages 22 and 26 through auxiliary passages 38 and 40, respectively.

The regions between each anode and the cathode, where laser activity produces counter-propagating laser beams, is designated the gain regions of the ring laser conduit. Such gain regions are shown by the shaded portions of the passages 20, 22, and 26 in Fig. 1. The beams thus produced propagate from corner mirror to corner mirror around the closed conduit including through the non-gain regions of the conduit which are unshaded. The ring laser gyro generates an output of combined beams at 42 through a partly transmitting mirror 18. The beats between the extracted beams and their rate are counted. Their rate, without any beats due to temperature gradients and Langmuir flow, is a measure of the angular velocity experienced by the ring laser about its sensing axis.

A frequency shift not correlating to the rotation of the ring laser gyro 10 may be caused by the flow of the laser gases within the gain regions of the laser conduit. Such gas flow changes the optical path lengths of the laser beams producing error or bias beats. The gas flow is due to electrophoretic or Langmuir flow and to thermal gradients in the ring laser gas.

A ring laser gyro 10 may be subjected to an operating range of more than 150 degrees Centigrade. Such temperature changes, because temperatures take time to stabilize, cause thermal gradients within the laser which cause the laser gas to flow. Previous attempts to control the temperature gradients across a ring laser gyro have been cumbersome and ineffective, and ring laser gyros of the prior art are limited by their bias sensitivity to thermal gradients.

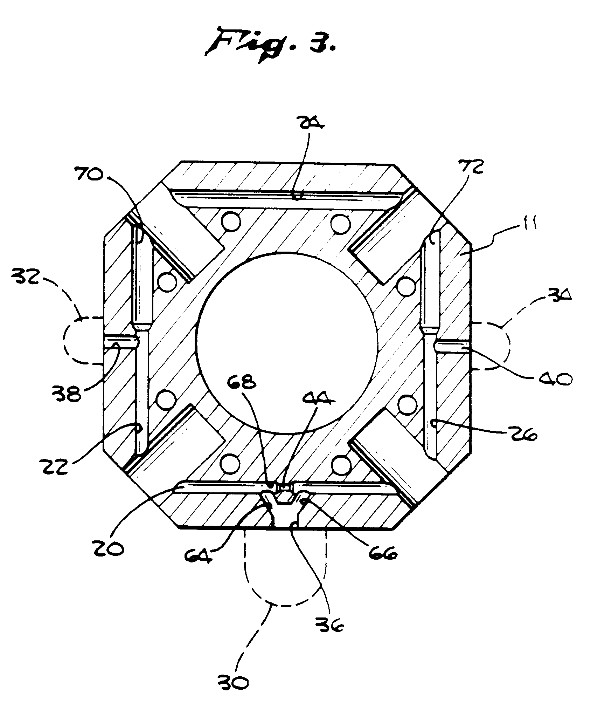

In Fig. 2, the laser block 11 is shown in greater detail. It will be seen that restrictive apertures 44 are symmetrically placed at the point of the symmetry formed by the intersection of passage 36 and passage 20. This point of symmetry is formed where the crossed passages or legs join to create a T-shaped configuration. The restrictive apertures 44 are mounted astride passage 36 at the center of passage 20 equidistant from anodes 32 and 34.

The restrictions 44 could be mounted between the cathode 30 and the anodes 32, 34, at two other points within passage 20 equidistant from the T-shaped junction of passage 20 and passage 36.

Further it will be understood that the counter-propagating laser beams may also be generated by a single anode mounted at passage 36 and two cathodes mounted at passages 32 and 34.

Preliminary to describing the embodiment in detail, it is useful to define certain terms. Flow impedance is defined as the ratio of the forces causing the flow to the ensuing flow velocity.. Flow conductance is the reciprocal of flow impedance. The Poiseuille Law for laminar flow in a circular pipe is:

$V = \{1/32\mu\} \{D^2/L\}\Delta p$, where V is the mean velocity; $\mu$ is viscosity of the fluid; D is the diameter of the pipe; L is the length of the pipe; and $\Delta P$ is the pressure differential forcing the flow. Flow conductance is defined as velocity of the gas divided by the pressure differential. It is therefore proportional to the diameter squared divided by the length. Factors causing a pressure differential include, but are not limited to, thermal gradients along the pipe.

In Fig. 2 passage 24 is substantially enlarged in cross-section coupared to passages 20, 22 and 26. Because of the enlargement, flow of the laser gas, due to thermal gradients, occurs within the non-gain regions, rather than the gain regions, of the ring laser conduit. By increasing the cross-sectional area of the non-gain regions, or decreasing the cross-sectional area of the gain regions, or both, to such an extent that the ratio of the flow conductance of the gain regions to the flow conductance of the non-gain regions is substantially less than unity there is no more net movement of the gas within the gain region.

In the preferred embodiment, the ratio of flow conductance in the gain region to flow conductance in the non-gain region is between one-to-two and one-to-four.

It is seen that the enlarged portions of the non-gain regions are symmetrically positioned to be symmetrical within the conduit relative to the point of symmetry described above and formed where the crossed passages or legs join to create a T-shaped configuration That is, every enlargement on one side of that point of symmetry is duplicated on the other side.

By symmetrically placing the restriction 44 and/or symmetrically designing the diameters of the gain regions and non-gain regions to achieve the proper ratio of flow conductance, the ring laser gyro 10 experiences no net thermally induced movement of gas molecules within the gain regions where the laser activity takes place.

In Fig. 3, a second embodiment of laser block 11 is shown using a Y-shaped junction between passage 36 and passage 20 and an enlarged non-gain region which extends beyond passage 24 into passages 22 and 26. It is seen that passage 36 divides into two legs 64 and 66 with the single leg 36 joined to cathode 30 and the two legs 64 and 66 joined to passage 20 on either side of the restrictive aperture 44 to create the Y-shape. Aperture 44 is thus mounted in the portion 68, of passage 20, between the inner ends of passages 64, 66. Little or no laser activity takes place in the portion 68, but it carries the laser beam. The non-gain regions are fully enlarged in Fig. 3. That is, in addition to enlarging passage 24, that portion of passages 22 and 26 above the passages 38 and 40, respectively, are also enlarged as shown at 70 and 72. Since flow conductance is proportional to diameter squared divided by length, the prolongation of extension of large diameter to non-gain regions 70, and 72 allow the desired high conductance without an excessively large diameter for passage 24.

In summary, the flow of gas within the gain regions of the ring laser conduit is reduced by (1) restricting the flow of such gas and (2) reducing the ratio of the flow conductance of the gain regions to the flow conductance of the non-gain regions.

## Claims

1. A ring laser gyro (10) having a ring laser conduit (20, 22, 24, 26) with a laser gas therein, including at least two means (30, 32, 34) for delivering electrical energy to gain regions of said conduit (20, 22, 24, 26) to form electric fields which are oppositely poled relative to said conduit to generate counter-propagating laser beams within said ring laser conduit, said means (30, 32, 34) for delivering electrical energy being symmetrically mounted to said ring laser conduit to define said gain regions and non-gain regions, said gain regions being symmetrically positioned to generate said at least two counter-propagating laser beams, characterized in that said laser passages include symmetrically mounted ratio-creating means (44) therein for creating a ratio of gas flow conductance in said gain regions to gas flow conductance in said non-gain regions that is less than unity.

2. A ring laser gyro as claimed in Claim 1, wherein said ratio creating means is flow restrictive means (44) for controlling laser gas flow within said gain regions.

3. A ring laser gyro as claimed in Claim 1 or 2, wherein said ratio creating means (44) has symmetrically positioned, enlarged cross-sections in said non-gain regions to increase the flow conductance of such non-gain regions.

4. A ring laser gyro as claimed in Claim 1, 2 or 3, wherein said ratio creating means (44) creates a ratio of flow conductance of gain regions to flow conductance of non-gain regions of between one-to-two and one-to-four, reducing the sensitivity of said ring laser gyro to thermal gradients.

5. A ring laser gyro as claimed in Claim 1, 2, 3 or 4, wherein said two means for delivering electrical energy to said gas are provided by one common cathode (30) and two anodes (32, 34) symmetrically mounted in electrical contact with said laser gas, said anodes (32, 34) being symmetrically spaced from said cathode (30) about said ring laser conduit (20, 22, 24, 26), the regions of said conduit between said cathode (30) and said anodes (32, 34) forming said gain regions.

6. A ring laser gyro as claimed in Claim 5, wherein said ratio creating means (44) is mounted in said conduit (20, 22, 24, 26) at a point of symmetry adjacent said cathode (30) and equidistant from said anodes (32, 34).

7. A ring laser gyro as claimed in Claim 5 or 6, wherein said non-gain regions, formed in said conduit between said anodes (30, 34) are formed with larger cross-sectional areas than the cross-sectional areas of said gain regions.

8. A ring laser gyro, as claimed in Claim 5, 6, or 7, wherein an auxiliary conduit connection (36) is provided between said cathode (30) and said gain regions of said laser conduit, having a T-shape formed by the crossing of said auxiliary conduit and said laser conduit (20, 22, 24, 26), and said ratio creating means (44) is mounted in said laser conduit at its intersection with said auxiliary conduit, forming a T-shape connection, at the point where said legs cross to form said point of symmetry, symmetrical to said cathode (30) and said anodes (32,34).

9. A ring laser gyro as claimed in any one of Claims 1 to 5, wherein said two means for delivering electrical energy to said gas are provided by one common anode and two cathodes in electrical contact with said laser gas, said cathodes being symmetrically spaced from said anode about said ring laser conduit, the regions of said conduit between said anode and said cathodes forming said gain regions.

10. A ring laser gyro as claimed in Claim 9, wherein at least a pair of said ratio creating means is mounted within said gain regions of said conduit equidistant from a point of symmetry symmetrical to said cathodes and said anode.

11. A ring laser gyro as claimed in Claim 9 or 10, wherein said non-gain regions have portions that are symmetrically positioned about said conduit relative to said anode, such non-gain region portions being larger in cross-sectional area than the cross-sectional area of said gain regions.

12. A ring laser gyro as claimed in Claim 9, 10 or 11, wherein the ratio of the flow conductance of said non-gain regions to the flow conductance of said gain regions is between two and four to one.

**Patentansprüche**

1. Ringlaserkreisel (10) mit einem Laserrohr (20, 22, 24, 26) mit einem Lasergas darin, der wenigstens zwei Vorrichtungen (30, 32, 34) zum Übertragen von elektrischer Energie zu Verstärkungsbereichen des Rohres (20, 22, 24, 26) umfaßt, an elektrische Felder zu bilden, die bezüglich des Rohres entgegengesetzt gepolt sind, an gegenläufige Laserstrahlen in dem Ringlaserrohr zu erzeugen, wobei die Vorrichtungen (30, 32, 34) zum Übertragen der elektrischen Energie symmetrisch zu dem Ringlaserrohr montiert sind, um die Verstärkungs- und Nicht-Verstärkungsbereiche zu bilden, wobei die Verstärkungsbereiche symmetrisch angeordnet sind, um wenigstens zwei gegenläufige Laserstrahlen zu erzeugen, dadurch gekennzeichnet, daß die Laserdurchlässe darin eine symmetrisch montierte, Verhältnis bildende Vorrichtung (44) umfassen, um ein Verhältnis von Gasflußleitfähigkeit in den Verstärkungsbereichen zu Gasflußleitfähigkeit in den Nicht-Verstärkungsbereichen zu bilden, das kleiner als Eins ist.

2. Ringlaserkreisel nach Anspruch 1, wobei die Verhältnis bildende Vorrichtung eine Durchfluß begrenzende Vorrichtung (44) ist, um den Lasergasfluß in den Verstärkungsbereichen zu regeln.

3. Ringlaserkreisel nach Anspruch 1 oder 2, wobei die Verhältnis bildende Vorrichtung (44) symmetrisch angeordnete, vergrößerte Querschnitte in den Nicht-Verstärkungsbereichen besitzt, um die Flußleitfähigkeit in diesen Nicht-Verstärkungsbereichen zu erhöhen.

4. Ringlaserkreisel nach Anspruch 1, 2 oder 3, wobei die Verhältnis bildende Vorrichtung (44) ein Verhältnis der Flußleitfähigkeit der Verstärkungsbereiche zur Flußleitfähigkeit der Nicht-Verstärkungsbereiche zwischen eins-zu-zwei und eins-zu-vier erzeugt, wobei die Empfindlichkeit des Ringlaserkreisels gegenüber thermischen Gradienten verringert wird.

5. Ringlaserkreisel nach Anspruch 1, 2, 3 oder 4, wobei die beiden vorrichtungen zum Übertragen elektrischer Energie auf das Gas durch eine gemeinsame Kathode (30) und zwei symmetrisch in elektrischem Kontakt mit dem Lasergas montierte Anoden (32, 34) gebildet werden, wobei die Anoden (32, 34) symmetrisch zum Ringlaserrohr (20, 22, 24, 26) von der Kathode (30) getrennt sind, wobei die Rohrbereiche zwischen der Kathode (30) und den Anoden (32, 34) die verstärkungsbereiche bilden.

6. Ringlaserkreisel nach Anspruch 5, wobei die Verhältnis bildende Vorrichtung (44) in dem Rohr (20, 22, 24, 26) an einem Symmetriepunkt neben der Kathode (30) und in äquidistantem bestand von den Anoden (32, 34) montiert ist.

7. Ringlaserkreisel nach Anspruch 5 oder 6, wobei die in dem Rohr zwischen den Anoden (32, 34) gebildeten Nicht-Verstärkungsbereiche mit Flächen größeren Querschnitts gebildet sind als die Querschnittsflächen der Verstärkungsbereiche.

8. Ringlaserkreisel nach Anspruch 5, 6 oder 7, wobei ein Hilfsrohranschluß (36) zwischen der Kathode (30) und den Verstärkungsbereichen des Laserrohres vorgesehen ist, der eine T-Form besitzt, die durch Überkreuzen des Hilfsrohres und des Laserrohres (20, 22, 24, 26) gebildet wird, und wobei die Verhältnis bildende Vorrichtung (44) in dem Laserrohr an seinem Schnittpunkt mit dem Hilfsrohr, der einen T-förmigen Anschluß bildet, an dem Punkt montiert ist, wo die Beine sich kreuzen, an den Symmetriepunkt zu bilden, der symmetrisch zur Kathode (30) und den Anoden (32, 34) ist.

9. Ringlaserkreisel nach einem der Ansprüche 1 bis 5, wobei die beiden Vorrichtungen zur Übertragen elektrischer Energie auf das Gas durch eine gemeinsame Anode und zwei in elektrischem Kontakt mit dem Lasergas montierte Kathoden gebitdet werden, wobei die Kathoden symmetrisch zum Ringlaserrohr von der Anode getrennt sind, wobei die Rohrbereiche zwischen der Anode und den Kathoden die Verstärkungsbereiche bilden.

10. Ringlaserkreisel nach Anspruch 9, wobei wenigstens ein Paar der Verhältnis bildenden Vorrichtung in äquidistantem bestand von einem Symmetriepunkt symmetrisch zu den Kathoden und der Anode innerhalb der Verstärkungsbereiche montiert ist.

11. Ringlaserkreisel nach Anspruch 9 oder 10, wobei die Nicht-Verstärkungsbereiche Bereiche besitzen, die symmetrisch um das Rohr zu der Anode gebildet sind, wobei solche Nicht-Verstärkungsbereiche im Querschnitt größer sind als die Querschnittsflächen der Verstärkungsbereiche.

12. Ringlaserkreisel nach Anspruch 9, 10 oder 11, wobei das Verhältnis der Flußleitfähigkeit der Nicht-Verstärkungsbereiche zur Flußleitfähigkeit der Verstärkungsbereiche zwischen zwei und vier-zu-eins liegt.

## Revendications

1. Gyromètre (10) à laser en anneau ayant un conduit (20, 22, 24, 26) de laser en anneau renfermant un gaz laser, comprenant au moins deux moyens (30, 32, 34) destinés à distribuer de l'énergie électrique à des régions de gain dudit conduit (20, 22, 24, 26) pour former des champs électriques qui sont de polarités opposées par rapport audit conduit afin de générer des faisceaux laser se propageant en sens contraires à l'intérieur dudit conduit de laser en anneau, lesdits moyens (30, 32, 34) destinés à distribuer de l'énergie électrique étant montés symétriquement sur ledit conduit de laser en anneau pour définir lesdites régions de gain et des régions de non-gain, lesdites régions de gain étant positionnées symétriquement de façon à générer lesdits, au moins deux, faisceaux laser se propageant en sens contraires, caractérisé en ce que lesdits passages laser renferment des moyens (44) de création de rapport, montés symétriquement, destinés à créer un rapport de la conductance d'écoulement de gaz dans lesdites régions à gain à la conductance d'écoulement de gaz dans lesdites régions à non-gain qui est inférieur à l'unité.

2. Gyromètre à laser en anneau selon la revendication 1, dans lequel ledit moyen de création d'un rapport est un moyen (44) d'étranglement d'écoulement destiné à commander l'écoulement du gaz laser à l'intérieur desdites régions à gain.

3. Gyromètre à laser en anneau selon la revendication 1 ou 2, dans lequel ledit moyen (44) de création de rapport présente des sections transversales élargies, disposées symétriquement dans lesdites régions à non-gain pour augmenter la conductance d'écoulement de ces régions à non-gain.

4. Gyromètre à laser en anneau selon la revendication 1, 2 ou 3, dans lequel ledit moyen (44) de création de rapport crée un rapport de la conductance d'écoulement de régions à gain à la conductance d'écoulement de régions à non-gain compris entre 1 à 2 et 1 à 4, réduisant la sensibilité dudit gyromètre à laser en anneau à des gradients thermiques.

5. Gyromètre à laser en anneau selon la revendication 1, 2, 3 ou 4, dans lequel lesdits deux moyens destinés à distribuer de l'énergie électrique audit gaz sont fournis par une cathode commune (30) et deux anodes (32, 34) montées symétriquement en contact électrique avec ledit gaz laser, lesdites anodes (32, 34) étant espacées symétriquement de ladite cathode (30) le long dudit conduit (20, 22, 24, 26) du laser en anneau, les régions dudit conduit entre ladite cathode (30) et lesdites anodes (32, 34) formant lesdites régions à gain.

6. Gyromètre à laser en anneau selon la revendication 5, dans lequel ledit moyen (44) de création de rapport est monté dans ledit conduit (20, 22, 24, 26) en un point de symétrie adjacent à ladite cathode (30) et équidistant desdites anodes (32, 34).

7. Gyromètre à laser en anneau selon la revendication 5 ou 6, dans lequel lesdites régions à non-gain, formées dans ledit conduit entre lesdites anodes (30, 34), sont formées de façon à avoir des aires, en section transversale, plus grandes que les aires en section transversale desdites régions à gain.

8. Gyroscope à laser en anneau selon la revendication 5, 6 ou 7, dans lequel un raccordement (36) de conduit auxiliaire est prévu entre ladite cathode (30) et lesdites régions à gain dudit conduit laser, ayant une forme en T formée par la croisement dudit conduit auxiliaire et dudit conduit laser (20, 22, 24, 26), et ledit moyen (44) de création de rapport est monté dans ledit conduit laser à son intersection avec ledit conduit auxiliaire, formant un raccordement en forme de T, au point où lesdites branches se croisent pour former ledit point de symétrie, symétrique à ladite cathode (30) et auxdites anodes (32, 34).

9. Gyromètre à laser en anneau selon l'une quelconque des revendications 1 à 5, dans lequel lesdits deux moyens destinés à distribuer de l'énergie électrique audit gaz sont constitués par une anode commune et deux cathodes en contact électrique avec ledit gaz laser, lesdites cathodes étant espacées symétriquement de ladite anode le long dudit conduit du laser en anneau, les régions dudit conduit entre ladite anode et lesdites cathodes formant lesdites régions à gain.

10. Gyromètre à laser en anneau selon la revendication 9, dans lequel au moins une paire desdits moyens de création de rapport est montée dans lesdites régions à gain dudit conduit à égale distance d'un point de symétrie symétrique auxdites cathodes et à ladite anode.

11. Gyromètre à laser en anneau selon la revendication 9 ou 10, dans lequel lesdites régions à non-gain comportent des parties qui sont placées symétriquement le long dudit conduit par rapport à ladite anode, ces parties des régions à non-gain étant d'une aire en section transversale plus grande que l'aire en section transversale desdites régions à gain.

12. Gyromètre à laser en anneau selon la revendication 9, 10 ou 11, dans lequel le rapport de la conductance d'écoulement desdites régions à non-gain à la conductance d'écoulement desdites régions à gain est compris entre 2 et 4 à 1.

Fig. 1.

Fig. 2.

Fig. 3.